Europäisches Patentamt

European Patent Office

Office européen des brevets

(11) Veröffentlichungsnummer: **0 277 499**

**A1**

(12) **EUROPÄISCHE PATENTANMELDUNG**

(21) Anmeldenummer: **88100364.4**

(51) Int. Cl.⁴: **C08B 37/14**

(22) Anmeldetag: **13.01.88**

(30) Priorität: **21.01.87 DE 3701509**

(43) Veröffentlichungstag der Anmeldung:
**10.08.88 Patentblatt 88/32**

(84) Benannte Vertragsstaaten:
**AT BE CH DE ES FR GB GR IT LI NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Rähse, Wilfried, Dr.**
**Kolhagenstrasse 44**
**D-4000 Düsseldorf 13(DE)**
Erfinder: **Engelskirchen, Konrad, Dr.**
**Gonellastrasse 24**
**D-4005 Meerbusch 3(DE)**

(54) **Verfahren zur Herstellung von Guar-(misch-)ethern aus Guarsplits.**

(57) Verfahren zur Herstellung von Guarethern sowie Mischethern von Guar durch Alkalisierung und Veretherungen an ruhenden Guarsplits, wobei die Alkalisierung durch Überschichten der Guarsplits mit Natronlauge einer Konzentration von 0,5 bis 50 Gew.-% bei Temperaturen zwischen 15 und 90 °C erfolgt und die Veretherung mittels gasförmigem Ethylen- und/oder Propylenoxid und/oder Methylchlorid erfolgt. Die Reinigung der Guarether wird am ruhenden Produkt im Reaktor vorgenommen.

EP 0 277 499 A1

## Verfahren zur Herstellung von Guar-(misch-)ethern aus Guarsplits

Die Erfindung betrifft ein neues, besonders einfaches Verfahren zur Herstellung von gereinigten sowie ungereinigten Guarethern.

Bei Guar handelt es sich um ein natürlich vorkommendes Polysaccharid aus beta-glykosidisch verknüpften Mannosemolekülen als lineare Hauptketten und Galactose-Seitengruppen.

Das Polygalactomannan Guar wird in zwei Formen als Rohstoff angeboten, nämlich zum einen in gemahlener Form als Guarmehl und zum anderen in Form der Guarsplits, die man nach Entfernung der Hülle aus den Guarbohnen direkt erhält. Qualitativ gute Guarsplits enthalten ca. 82 % Guar.

Es ist bekannt, bei der technischen Durchführung der Veretherung von Guarmehl in den meisten Fällen Lösungsmittel mitzuverwenden. Bei Einsatz der Guarsplits arbeitet man dagegen lösungsmittelfrei. Beide Verfahren werden üblicherweise in mehr oder minder schnellaufenden Mischern durchgeführt.

Nachteilig bei der Alkalisierung und Veretherung von Guarsplits in Mischern sind ungleichmäßige Alkalisierung beim Zutropfen oder Aufsprühen der Lauge, bzw. die ungleichmäßige Verteilung der meist in flüssiger Form zugegebenen Veretherungsmittel.

Ein weiterer, sehr wesentlicher Nachteil besteht darin, daß durch die Bewegung der Guarsplits selbst bei minimaler Drehzahl unvermeidbar ein Produktabrieb entsteht, der trotz Vernetzung z. B. mit Glyoxal oder Borax zu Ausbeuteverlusten in der Wäsche führt.

Es wurden nun gefunden, daß diese Nachteile nicht zu beobachten sind, wenn die Guarsplits in einem Autoklaven im Festbett ruhend angeordnet werden. Beispielsweise kann man mehrere Körbe mit Guarsplits füllen und im Autoklaven übereinander stellen, so daß nahezu der gesamte Reaktorraum ausgefüllt ist.

Nach Füllung des Reaktors wird der Luftsauerstoff durch mehrmaliges wechselweises Evakuieren und Spülen mit Stickstoff entfernt.

Die Alkalisierung erfolgt mit Lauge, üblicherweise Natronlauge, einer Konzentration von 0,5 bis 50 %, insbesondere 2 bis 12 %, durch Überschichten der Guarsplits im Autoklaven. Die Splits nehmen innerhalb von 10 bis 30 Minuten nahezu die gesamte Lauge, mit der sie in Kontakt kommen, auf. Restmengen werden rezirkuliert. Die Alkalisierung erfolgt entweder bei Raumtemperatur, das heißt, zwischen 15 und 30 °C oder zur Verkürzung der Chargenzeit bei erhöhter Temperatur bis zu etwa 90 °C. Sie ist nach 15 bis 60 Minuten abgeschlossen.

Falls erforderlich, werden die Guarsplits anschließend durch Einleiten von Dampf auf ca. 70 bis 80 °C hochgeheizt. Vorher stellt man die Temperatur im Heizkühl-Kreislauf des Autoklavenmantels auf etwa 75 °C ein.

Die Umsetzung mit Ethylenoxid oder Propylenoxid erfolgt zweckmäßig in der Gasphase. Der Reaktor ist mit einer Kreislaufleitung und einem Gasförderorgan (Kompressor oder Gebläse oder Flüssigkeitsringverdichter) ausgestattet.

Nach Erreichen von etwa 75 °C wird die Gasförderung eingeschaltet und das Inertgas z. B. Stickstoff umgepumpt. In den Inertgaskreislauf hinein verdampft man Propylenoxid und/oder Ethylenoxid in so geringer Menge, daß das gesamte Veretherungsmittel bei zügigem Reaktionsfortschritt in etwa 30 Minuten zugegeben ist. Die Reaktionswärme wird, um eine Überhitzung im Produkt zu vermeiden, über die Kühlwand und über den Wärmetauscher im Gaskreislauf abgeführt.

Die Wäsche erfolgt bei dem erfindungsgemäßen Verfahren im Reaktor entweder durch Besprühen der festen Guarether oder durch kurzzeitiges, ein-oder mehrmaliges Fluten des Reaktors mit Wasser. Nach Abziehen des letzten Waschwassers wird der Reaktor geöffnet und die Körbe herausgezogen. Im Falle der Herstellung gereinigter Produkte empfiehlt sich ein Zusatz von Borax zur Vernetzung. Der Vernetzer wird mit der Lauge zusammen auf die Guarsplits aufgebracht.

Die ungereinigten oder gereinigten Guarsplitether werden zweckmäßig zunächst naßgemahlen, dann getrocknet und zum Schluß endgemahlen im Mahl-Sicht-Kreislauf.

Auf diese Weise läßt sich ungereinigtes und gereinigtes Hydroxyethyl-, Hydroxypropyl-und Methylguar sowie Mischether hieraus im üblichen Substitutionsgradbereich MS von 0,1 bis 0,6 herstellen. Daneben sind bei diesem Verfahren aber auch extrem niedrige und extrem hohe Substitutionsgrade (bisherige experimentelle Obergrenze bei HPG: 1,5) einstellbar.

Gemäß Verfahren können auch Carboxymethylguar und deren Mischether hergestellt werden, indem das Natriumsalz der Monochloressigsäure in der zur Alkalisierung verwendeten Lauge gelöst wird.

## Beispiele

### Beispiel 1

In einem Technikumautoklaven (Gesamtinhalt: 50 l) wurde ein Korb mit einer Siebbespannung von 0,5 mm, gefüllt mit 10 kg Guarsplits (lutro), eingehängt. Nach Schließen des Autoklaven erfolgte mehrmaliges Evakuieren und Spülen mit Stickstoff.

In einer Vorlage wurden vorher eine Lösung aus 0,96 kg 50 %ige Natronlauge, 11,04 kg Wasser und 0,050 kg Borax angesetzt. Die Luft über der Lauge wurde zunächst abgepumpt und durch Stickstoff (ständig leichter Überdruck) ersetzt. Mittels des N₂-Überdrucks erfolgte das Überleiten der Lauge über ein Polierfilter in den Reaktor.

Nach 20min. Alkalisierzeit bei Raumtemperatur wurde der nicht aufgenommene Laugenanteil (ca. 3,5 kg) durch Stickstoff aus dem Reaktor gedrückt. Anschließend ist der Autoklav bei einem N₂-Druck von 1,2 bar geschlossen worden.

Die alkalisierten Guarsplits wurden auf die Reaktionstemperatur von 75 bis 80 °C durch Aufheizen der Reaktorwand (Doppelmantel) und Direkteinblasen von Dampf aufgeheizt.

Nach Erreichen der Reaktionstemperatur ist der Flüssigkeitsringverdichter, der sich in einer Kreislaufleitung mit Kühler und Propylenoxid-Verdampfer befindet, eingeschaltet worden. In diesen N₂-Kreislauf wurde bei einer Temperatur von etwa 78 °C Propylenoxid in einer Menge kontinuierlich zudosiert und verdampft, daß der Gesamtdruck im System konstant 1,5 bis 1,7 bar betrug. Die Menge an Propylenoxid lag bei 1,88 kg.

Gleichzeitig wurden die Mantelkühlung sowie der Gaskühler in der Kreislaufleitung in Betrieb genommen.

Nach einer Zudosierzeit von 35 Minuten und weiteren 20 Minuten Nachreaktionszeit bei etwa 80 °C ließ sich kein Propylenoxid mehr im Gasraum nachweisen. Die Veretherung war beendet.

Die Wäsche erfolgte durch Überschichten des Korbinhaltes mit angesäuertem Waschwasser, das nach einer Einwirkzeit von 15 Minuten abgelassen wurde. Nach Entnahme des Korbes wurde der Guarether einer Naßmahlung, Trocknung sowie Trockenmahlung unterzogen. Ein Hydroxypropylguar mit den folgenden Eigenschaften wurde erhalten:

Substitutionsgrad (MS): 0,42 (Selektivität: 65 %)

Viskosität (2 %ige Lösung; pH größer 7 und pH = 5) jeweils 66000 mPas (25 °C, Brookfield)

Trübung der 2 %igen Lösung: 85 % (Trübungsmeßgerät nach Lange)

## Beispiel 2

Bei Alkalisierung mit 2,5 gew.-%iger Natronlauge wurde unter sonst gleichen Bedingungen (gemäß Beispiel 1) ein Substitutionsgrad (MS) von 0,51 erreicht. Dies entspricht einer Selektivität von 78,9 %.

## Beispiel 3

Beispiel 1 wurde wiederholt, mit dem Unterschied, daß eine Aufheizung der Natronlauge vor der Zugabe in den Autoklaven auf 65 % erfolgte. Das erhaltene Produkt wies einen Substitutionsgrad (MS) von 0,45 (Selektivität: 71,3 %) auf.

**Ansprüche**

1. Verfahren zur Herstellung von Guarethern sowie Mischethern von Guar, dadurch gekennzeichnet, daß die Alkalisierung und Veretherungen an ruhenden Guarsplits durchgeführt werden.

2. Verfahren zur Alkalisierung von Guarsplits gemäß Anspruch 1, dadurch gekennzeichnet, daß die Alkalisierung durch Überschichten der Guarsplits mit Natronlauge einer Konzentration von 0,5 bis 50 Gew.-%, vorzugsweise 2 bis 12 Gew.-%, bei Temperaturen zwischen 15 und 90 °C erfolgt.

3. Verfahren gemäß Ansprüchen 1 und 2, dadurch gekennzeichnet, daß die Veretherung mittels gasförmigem Ethylen-und/oder Propylenoxid und/oder Methylchlorid erfolgt.

4. Verfahren gemäß Ansprüchen 1 und 2, dadurch gekennzeichnet, daß die Veretherung/Mischveretherung der alkalisierten Guarsplits mit monochloressigsaurem Natrium, das in der zur Alkalisierung benutzten Natronlauge gelöst wird, erfolgt.

5. Verfahren gemäß Ansprüchen 1 bis 3, dadurch gekennzeichnet, daß die Reinigung der Guarether am ruhenden Produkt im Reaktor erfolgt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 242 401 (SCHOLTEN-HONIG RESEARCH B.V.) * Seite 5, Beispiel I; Seite 6, Beispiel II * --- | 1-5 | C 08 B 37/14 |
| Y | FR-A-2 513 265 (DIAMALT AG) * Seite 4, Zeilen 4-13; Ansprüche 1-3 * --- | 1-5 | |
| Y | CHEMICAL ABSTRACTS, Band 101, Nr. 18, Oktober 1984, Seite 100, Zusammenfassung Nr. 153783m, Columbus, Ohio, US; & JP-A-59 96 103 (MITSUBISHI ACETATE CO., LTD) 02-06-1984 * Zusammenfassung * ----- | 1-5 | |

**RECHERCHIERTE SACHGEBIETE (Int. Cl.4)**

C 08 B 37/00

Der vorliegende Recherchenbericht wurde für alle Patentansprüche erstellt

| Recherchenort | Abschlußdatum der Recherche | Prüfer |
|---|---|---|
| DEN HAAG | 20-04-1988 | ESPINOSA Y CARRETERO M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)